# EUROPÄISCHE PATENTSCHRIFT

(11) **EP 3 423 225 B1**
(45) Veröffentlichungstag und Bekanntmachung des Hinweises auf die Patenterteilung: **03.07.2024**
(21) Anmeldenummer: 17712690.1
(22) Anmeldetag: 22.02.2017
(51) Int. Cl.: B23C 5/06, B23C 5/20, B29C 33/00

(54) **SCHNEIDEINSATZ**
CUTTING INSERT
PLAQUETTE DE COUPE

(30) Priorität: 29.02.2016 AT 4216 U
(43) Veröffentlichungstag der Anmeldung: 09.01.2019
(73) Patentinhaber: Ceratizit Austria Gesellschaft m.b.H., 6600 Reutte (AT)
(72) Erfinder: BURTSCHER, Peter, 6600 Reutte (AT); PRAST, Josef, 6600 Reutte (AT)
(74) Vertreter: Ciesla, Dirk
(86) Internationale Anmeldenummer: PCT/AT2017/000009
(87) Internationale Veröffentlichungsnummer: WO 2017/147630

(56) Entgegenhaltungen:
- EP-A1- 2 060 352
- WO-A1-2014/208513
- AT-U1- 1 430
- JP-A- 2015 100 901
- US-A- 3 786 540
- US-A1- 2010 202 839

## Beschreibung

Die Erfindung betrifft einen Schneideinsatz mit den Merkmalen des Oberbegriffs von Anspruch 1.

Gattungsgemäße Schneideinsätze werden für das sogenannte *High Feed Milling* eingesetzt, das ist Fräsen mit relativ geringen Spantiefen und hohen Vorschubgeschwindigkeiten.

Beim *High Feed Milling* wird mit hohen Vorschubraten und geringen Schnitttiefen gearbeitet, beispielsweise um Planflächen möglichst effizient zu zerspanen.

Bei den Schneideinsätzen handelt es sich typischerweise um dreieckige oder viereckige Wendeschneidplatten.

Aus der AT 12004 U1 ist ein gattungsgemäßer Schneideinsatz mit einer im Wesentlichen dreieckförmiger oder quadratischer Grundform bekannt mit einer Deckfläche und einer Grundfläche, die durch seitliche Freiflächen miteinander in Verbindung stehen, wobei durch die Verschneidung von Deckfläche und/oder Grundfläche mit den Freiflächen jeweils drei bzw. vier konvex nach außen gekrümmte Schneidkanten ausgebildet sind, die jeweils zumindest aus einem Kreisbogen und mindestens einem im Wesentlichen geraden Abschnitt bestehen und die über Schneidecken mit einem Eckenradius miteinander in Verbindung stehen.

Die AT1430U zeigt eine quadratische Wendeschneidplatte zum Eck- und Nutenfräsen mit einem in Seitenansicht abschnittsweise konvexen Verlauf der Schneidkante.

Die EP2060352 zeigt einen Schneideinsatz mit wellenförmigem Schneidkantenverlauf.

Die US2010202839 zeigt eine doppelseitige Wendeschneidplatte mit einem in Seitenansicht abschnittsweise konvexen Verlauf der Schneidkante.

Aus der US3786540 ist ein Schneideinsatz mit einem in Seitenansicht abschnittsweise konvexen Verlauf der Schneidkante bekannt.

Die WO2014208513 zeigt einen Schneideinsatz gemäß dem Oberbegriff des Anspruchs 1, mit abschnittsweise konvexem Verlauf der jeweiligen Schneidkante, wobei die konvexen Abschnitte jedoch durch Geradenabschnitte begrenzt sind.

Aufgabe der vorliegenden Erfindung ist es einen verbesserten Schneideinsatz anzugeben.

Gelöst wird diese Aufgabe durch einen Schneideinsatz mit den Merkmalen von Anspruch 1. Bevorzugte Ausführungsformen sind in den abhängigen Ansprüchen angegeben.

Indem der konvexe Abschnitt der entsprechenden Schneidkante beidseitig von konkav gekrümmten Abschnitten begrenzt ist, wird ein wesentlich sanfterer Schnitt als mit aus dem Stand der Technik bekannten Schneideinsätzen erzielt.

Dies erklärt sich zum einen durch die gegenüber bekannten Schneideinsätzen vergrößerte Berührungslänge der Schneidkante. Mit Berührungslänge ist im Kontext der vorliegenden Anmeldung die Länge der tatsächlich im Eingriff mit einem Werkstück befindlichen Schneidkante gemeint. Durch die Ausgestaltung in einen konvexen Abschnitt und daran angrenzende konkave Abschnitte ist die Berührungslänge gegenüber einer beispielsweise geraden Schneidkante verlängert. Eine verlängerte Berührungslänge bewirkt, dass bei gegebenen äußeren Abmessungen eines Schneideinsatzes lokal geringere Schnittkräfte wirken und eine größere Strecke zur Wärmeabfuhr zur Verfügung steht.

Zudem wird durch die erfindungsgemäße Ausgestaltung der entsprechenden Schneidkante ein im Wesentlichen über die gesamte Länge der im Eingriff mit dem zu zerspanenden Material stehenden Schneidkante schälender Schnitt ermöglicht. Von einem schälenden Schnitt spricht man, wenn die Schneidkante nicht normal zur Bewegungsrichtung steht. Ein schälender Schnitt ist mit einem sanfteren Schnittkraftaufbau und geringeren Schnittkräften verbunden.

Der in Bewegungsrichtung des Schneideinsatzes vorne liegende konvexe Abschnitt wirkt wie ein Pflug und erzeugt einen schälenden Schnitt. Die daran anschließenden konkaven Abschnitte formen den Span in einer hinsichtlich der Schnittkräfte besonders vorteilhaften Weise:
In Versuchen der Anmelderin hat sich gezeigt, dass eine solcherart ausgebildete Schneide einen Span erzeugt, der eine im Wesentlichen gestreckte Form bewahrt, sich also nicht entgegen der Bewegungsrichtung des Schneideinsatzes aufrollt. Die zum Aufrollen des Spanes erforderlichen Kräfte tragen zu einer erhöhten Belastung der Schneidkante bei. Indem also der Span seine im Wesentlichen gestreckte Form bewahrt, reduziert sich die auf die Schneidkante wirkende Kraft, und die Standzeit des Schneideinsatzes wird erhöht.

Die Angaben "konvex" und "konkav" beziehen sich hier auf das Erscheinungsbild der Kontur der Schneidkanten in einer Seitenansicht auf eine Seitenfläche. Der konvexe Abschnitt ist also bezüglich des Schneideinsatzes nach oben außen gekrümmt.

Der Schneideinsatz kann eine im Wesentlichen dreieckförmige oder quadratische Grundform aufweisen. Bevorzugt ist die quadratische Form, da der Schneideinsatz in diesem Fall 4-fach indexierbar ausgeführt werden kann. Erfindungsgemäß ist vorgesehen, dass sich die konkav gekrümmten Abschnitte bis zu den jeweils benachbarten Schneidecken erstrecken. Das heißt, die Schneidkante weist eine stetige Krümmung auf.

Bevorzugt ist vorgesehen, dass die Übergänge vom konvexen Abschnitt in den ersten konkaven Abschnitt und vom konvexen Abschnitt in den zweiten konkaven Abschnitt jeweils tangential ausgebildet sind.

Bevorzugt ist vorgesehen, dass an allen Übergängen von Freiflächen zur Deckfläche Schneidkanten ausgebildet sind. Somit stehen bei einem quadratischen Schneideinsatz vier unabhängige Schneidkanten, bei einem dreieckigen Schneideinsatz drei unabhängige Schneidkanten zur Verfügung. Man spricht im ersten Fall von einem 4-fach indexierbaren Schneideinsatz und im Fall eines dreieckigen Schneideinsatzes von einem 3-fach indexierbaren Schneideinsatz. Aus Gründen der Materialausnutzung ist man bestrebt, an allen Übergängen von Freiflächen zur Deckfläche Schneidkanten auszubilden.

Es ist vorgesehen, dass der konvex gekrümmte Abschnitt außermittig zwischen zwei Schneidecken liegt. Betrachtet man also eine Schneidkante, so liegt der Scheitelpunkt des konvexen Abschnittes nicht in der Mitte der Schneidkante. Vielmehr ist der Scheitelpunkt des konvex gekrümmten Abschnittes in Richtung jener Schneidecke verschoben, welche bei einem Einsatz des Schneideinsatzes bezüglich einer Flugbahn des Schneideinsatzes radial innenliegend ist bzw., auf einen Werkzeughalter bezogen, bezüglich des Werkzeughalters radial innenliegend ist. Damit wird erreicht, dass bei einem Einsatz des Schneidwerkzeuges der konvex gekrümmte Abschnitt als erster Abschnitt der Schneidkante in ein zu zerspanendes Material eintaucht.

Bevorzugt ist vorgesehen, dass ein Krümmungsradius eines konkav gekrümmten Abschnittes ein drei- bis sechsfaches des Krümmungsradius des konvex gekrümmten Abschnittes beträgt. Die konkaven Abschnitte weisen also bevorzugt eine geringere Krümmung auf als der konvexe Abschnitt.

Es ist vorgesehen, dass die Schneidkanten einen in einer Draufsicht auf die Deckfläche konvexen Verlauf aufweisen. Die Schneidkanten sind also nach außen gekrümmt. Der Verlauf der Schneidkanten ist dabei bevorzugt von Ellipsenabschnitten gebildet.

Schutz wird auch begehrt für eine Anordnung wenigstens eines Schneideinsatzes in einem Werkzeughalter.

Die Erfindung wird im Folgenden durch die Figuren näher erläutert.

Dabei zeigt:
- Fig. 1: einen erfindungsgemäßen Schneideinsatz in einer perspektivischen Ansicht
- Fig. 2: einen erfindungsgemäßen Schneideinsatz in einer Seitenansicht
- Fig. 3: einen erfindungsgemäßen Schneideinsatz in einer Draufsicht
- Fig. 4: einen erfindungsgemäßen Schneideinsatz in einer Draufsicht im Eingriff mit einem Werkstück
- Fig. 5: eine Anordnung aus einem erfindungsgemäßen Schneideinsatz und einem Werkzeughalter

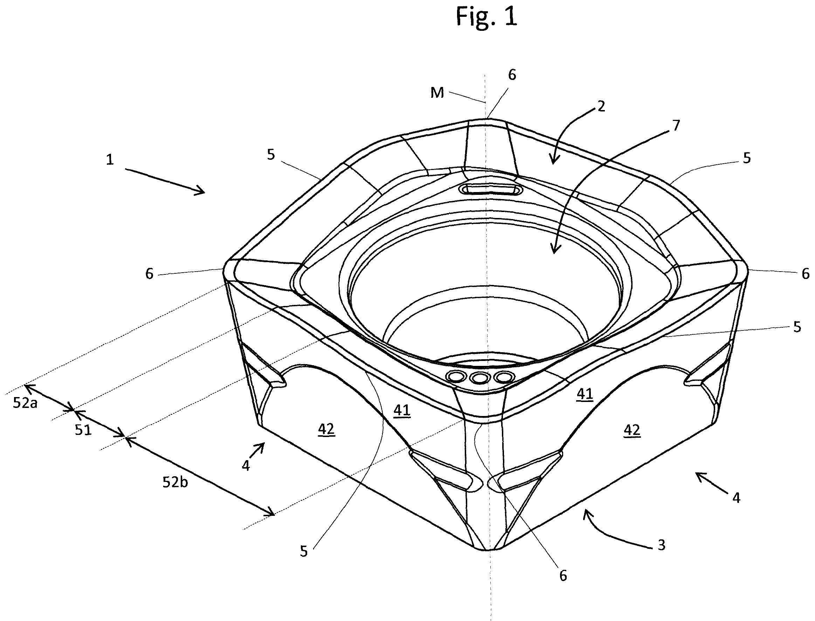

Figur 1 zeigt einen erfindungsgemäßen Schneideinsatz 1 in einer perspektivischen Ansicht. Der Schneideinsatz 1 ist zum Fräsen mit hohen Vorschubraten, das sogenannte *High Feed Milling* ausgebildet. Charakteristisch für das Fräsen mit hohen Vorschubraten ist eine geringe Schnitttiefe und eine hohe Vorschubrate. Der Schneideinsatz 1 ist in diesem Ausführungsbeispiel mit quadratischer Grundgestalt (als sogenannte S-Platte) ausgebildet. Alternativ könnte der Schneideinsatz 1 mit dreieckiger Grundgestalt (als sogenannte Dreieck-Platte, auch T-Platte genannt) ausgebildet sein.

Der Schneideinsatz 1 weist eine Deckfläche 2 und eine Grundfläche 3 auf, zwischen welchen Seitenflächen 4 liegen, mit daran ausgebildeten Freiflächen 41, welche an die Deckfläche 2 angrenzen. Am

Übergang von Freiflächen 41 zur Deckfläche 2 sind Schneidkanten 5 ausgebildet, welche zwischen Schneidecken 6 verlaufen. Die Schneidecken 6 sind mit einem Krümmungsradius gerundet ausgeführt.

Weiters ist an einer Seitenfläche 4 eine Anlagefläche 42 ausgebildet, über welche der Schneideinsatz 1 in einem Werkzeughalter (nicht gezeigt) formschlüssig positioniert werden kann. Der Schneideinsatz 1 ist bezüglich einer Mittelachse M symmetrisch.

Bevorzugt ist am Übergang einer jeden Freifläche 41 zur Deckfläche 2 eine Schneidkante 5 ausgebildet. So erhält man im Falle der quadratischen Grundgestalt einen 4-fach indexierbaren Schneideinsatz 1. 4-fach indexierbar bedeutet, dass vier unabhängige Schneidkanten 5 für eine Bearbeitung verwendet werden können. In diesem Fall wird durch eine Drehung des Schneideinsatzes 1 um 90° eine neue Bearbeitungsposition eingestellt. Bei einer quadratischen Grundgestalt des Schneideinsatzes ergeben sich somit vier Schneidkanten 5, welche durch vier Schneidecken 6 beabstandet sind.

Der Schneideinsatz 1 weist darüberhinaus eine zentrale Bohrung 7 zur Aufnahme einer Spannschraube auf, mittels welcher der Schneideinsatz 1 an einem Werkzeughalter (nicht gezeigt) befestigt werden kann.

Die Freiflächen 41 schließen mit der Deckfläche 2 einen Winkel von kleiner 90° ein. Der Schneideinsatz 1 verjüngt sich ausgehend von der Deckfläche 2 in Richtung Grundfläche 3.

Eine entsprechende Schneidkante 5 weist einen konvexen, nach oben gekrümmten Abschnitt 51 auf. Der konvexe Abschnitt 51 geht links in einen ersten konkaven Abschnitt 52a und rechts in einen zweiten konkaven Abschnitt 52b über. Die konkaven Abschnitte 52a, 52b erstrecken sich jeweils vom konvexen Abschnitt 51 bis zu den jeweils angrenzenden Schneidecken 6. Die Richtungsangaben beziehen sich auf eine Seitenansicht auf eine entsprechende

### Seitenfläche 4.

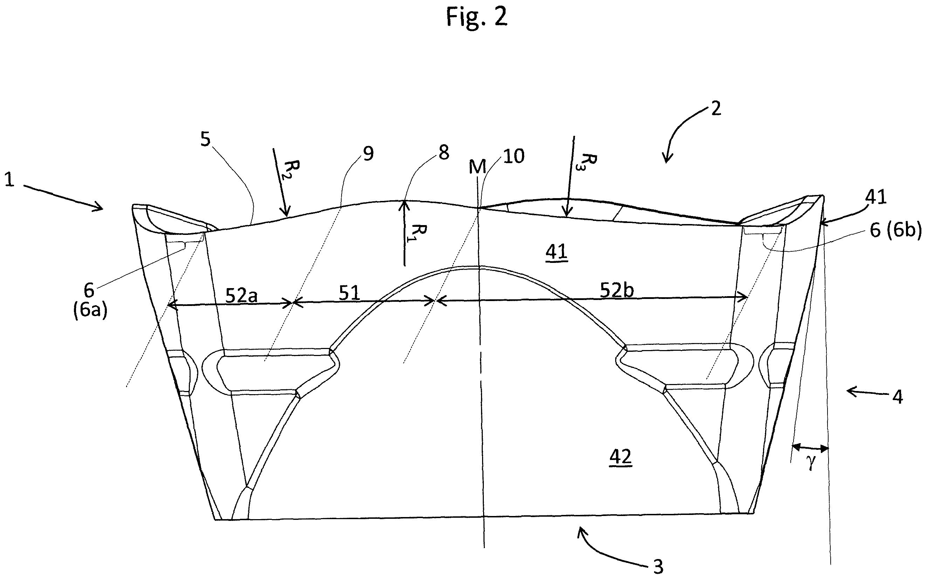

Die Verhältnisse gehen noch klarer aus Figur 2 hervor. Figur 2 zeigt einen erfindungsgemäßen Schneideinsatz 1 in einer Seitenansicht auf eine Seitenfläche 4.

Die Schneidkante 5 weist einen konvexen Abschnitt 51 mit einem Krümmungsradius R₁ auf. Der konvexe Abschnitt 51 ist bezüglich des Schneideinsatzes nach oben außen gekrümmt. Der konvexe Abschnitt 51 geht in Betrachtungsrichtung links an einem Übergangspunkt 9 in einen ersten konkaven Abschnitt 52a mit einem Krümmungsradius R₂ und in Betrachtungsrichtung rechts an einem Übergangspunkt 10 in einen zweiten konkaven Abschnitt 52b mit einem Krümmungsradius R₃ über.

Der konvex gekrümmte Abschnitt 51 liegt außermittig zwischen zwei Schneidecken 6. Der Scheitelpunkt 8 des konvex gekrümmten Abschnittes 51 ist dabei in Richtung jener Schneidecke 6a verschoben, welche bei einem Einsatz des Schneideinsatzes 1 bezüglich einer Flugbahn des Schneideinsatzes 1 radial innenliegend ist.

Die Übergänge vom konvexen Abschnitt 51 in den ersten konkaven Abschnitt 52a bzw. vom konvexen Abschnitt 51 in den zweiten konkaven Abschnitt 52b sind jeweils tangential ausgebildet. In anderen Worten liegen die Mittelpunkte der Krümmungsradien des konvexen Abschnittes 51 und des jeweiligen konkaven Abschnittes sowie die jeweiligen Übergangspunkte 9, 10 auf Geraden.

Es sei angemerkt, dass sich die Angaben zur Beschreibung der Konvexität, der Konkavität sowie der Übergänge auf eine Normalprojektion des Schneideinsatzes 1 beziehen.

Es ist keineswegs zwingend, dass sich der konvexe Abschnitt 51 und die konkaven Abschnitte 52a, 52b durch jeweils einen einzigen Krümmungsradius beschreiben lassen müssen. Ebenso ist es vorstellbar, dass die jeweiligen Konturen einen Verlauf mit verschiedenen Krümmungen aufweisen.

Im Einsatz ist der Schneideinsatz 1 gegenüber einem Werkstück (nicht gezeigt) so *angestellt,* dass die Schneidecke 6a (*die* in *einer* Seitenansicht linke Schneidecke 6) der bearbeiteten Werkstückoberfläche am nächsten liegt. Der Scheitelpunkt 8 des konvexen Abschnittes 51 ist gegenüber einer Mittelachse M des Schneideinsatzes 1 in Richtung jener Schneidecke 6a verschoben, welche während eines Einsatzes der betrachteten Schneidkante 5 der Ebene der bearbeiteten Werkstückoberfläche am nächsten liegt.

Die oben geschilderten Verhältnisse bezüglich der Lage des Scheitelpunktes 8 des konvexen Abschnittes 51 gelten für Schneideinsätze 1 für eine Bearbeitung mit einem rechtsdrehenden Werkzeug. Sollte der Schneideinsatz für einen linksdrehenden Einsatz vorgesehen sein, wäre die Anordnung gespiegelt, d.h. der Scheitelpunkt 8 des konvexen Abschnittes 51 wäre gegenüber einer Mittelachse M des Schneideinsatzes 1 nach rechts verschoben.

Der erste konkave Abschnitt 52a mit einem Krümmungsradius R₂ erstreckt sich vom ersten Übergangspunkt 9 bis zu jener Schneidecke 6a, welche der bearbeiteten Werkstückoberfläche am nächsten ist.

Der zweite konkave Abschnitt 52b erstreckt sich vom zweiten Übergangspunkt 10 bis zur Schneidecke 6b, welche beim Einsatz des Schneideinsatzes radial außen liegt. Diese radial außen liegende Schneidecke 6b ist beim *High Feed Milling* normalerweise nicht im Eingriff mit dem Werkstück.

Im Einsatz ragt der der konvexe Abschnitt 51 in Bewegungsrichtung des Schneideinsatzes 1 am weitesten vor. Beim Eintreten des Schneideinsatzes in das zu zerspanende Werkstück tritt der konvexe Abschnitt 51 zuerst ein und erzeugt einen schälenden Schnitt gleich einem Pflug. In zeitlicher Folge steigt die im Eingriff befindliche Länge der Schneidkante 5 stetig an. Dies bewirkt einen gleichmäßigen Schnittkraftaufbau und einen sanften Schnitt.

Die daran anschließenden konkaven Abschnitte 52a, 52b schneiden ebenfalls schälend und bewirken, dass sich ein abgenommener Span nicht entgegen der Bewegungsrichtung des Schneideinsatzes aufrollt, sondern eine im Wesentlichen gestreckte Form bewahrt. Da zum Aufrollen des Spanes entgegen der Bewegungsrichtung Kräfte erforderlich sind, treten beim Einsatz eines erfindungsgemäßen Schneideinsatzes 1 geringere Schnittkräfte auf als bei herkömmlichen Schneideinsätzen.

Eine weitere Erklärung für die beobachteten besonders günstigen Schnittkräfte wird darin gesehen, dass die an den konvexen Abschnitt beidseitig anschließenden konkaven Abschnitte eine laterale Aufweitung des Spanes unterbinden und damit die Schnittkräfte reduzieren. Während also am konvexen Abschnitt der Span wie bei einem Pflug seitlich aufgedehnt wird, formen die konkaven Abschnitte den Span dem entgegenwirkend ein. Eine schnittkrafterhöhende laterale Aufweitung bzw. Dehnung des Spanes wird dadurch vermieden oder verringert. Die besonders günstige Wirkung wird den konkaven Abschnitten zugeschrieben.

Die Freiflächen 41 sind in einem Winkel von kleiner 90° zur Deckfläche 2 angestellt. Damit weist der Schneideinsatz 1 einen plattenspezifisch positiven Freiwinkel γ auf.

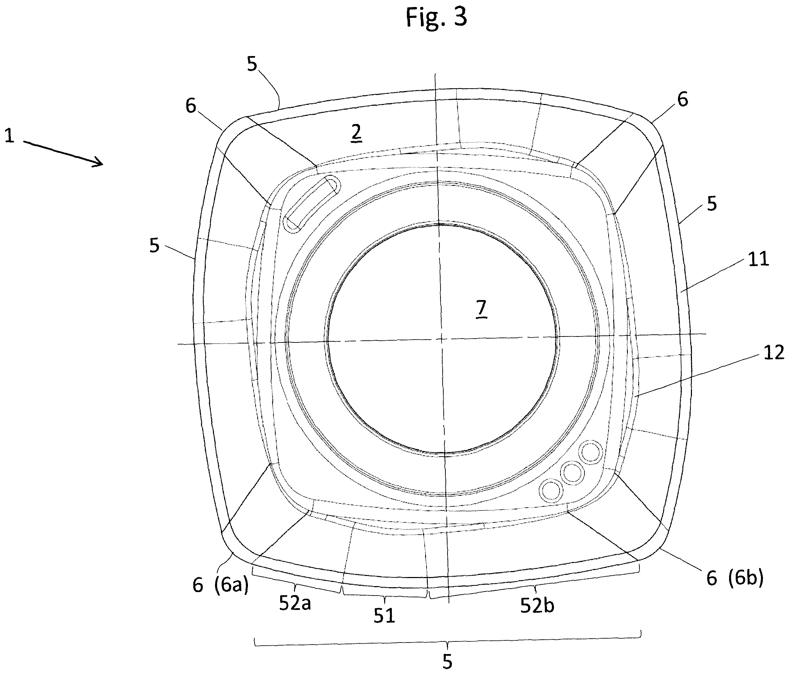

Figur 3 zeigt einen erfindungsgemäßen Schneideinsatz 1 in einer Draufsicht auf die Deckfläche 2. Die Schneidkanten 5 sind konvex nach außen gekrümmt und weisen eine abschnittsweise elliptische Kontur auf. So kann in die Kontur des ersten konkaven Abschnittes 52a, des konvexen Abschnittes 51 und des zweiten konkaven Abschnittes 52b jeweils ein Ellipsenabschnitt eingeschrieben werden. Alternativ kann die Krümmung von einer anderen Kurve als einer Ellipse beschrieben sein.

Es sei der Klarheit wegen wiederholt, dass die eingangs diskutierte Konkavität der konkaven Abschnitte 52a, 52b sowie die Konvexität des konvexen Abschnittes 51 sich auf eine Seitenansicht auf eine Seitenfläche 4 bezieht. Darüber hinaus und wie in der vorliegenden Figur gezeigt, zeigen die konkaven Abschnitte 52a, 52b und der konvexe Abschnitt 51 in einer Draufsicht auf die Deckfläche 2 einen konvexen (nach außen bauchigen) Verlauf. Dieser konvexe Verlauf kann durch Krümmungsradien beschrieben werden, welche normal zur Mittelachse M liegen. Bevorzugt kann die Kontur durch Ellipsenabschnitte angegeben werden. Diese Angabe bezieht sich auf eine Normalprojektion auf die Deckfläche 2.

Am Übergang der Deckfläche 2 zu den Schneidkanten 5 bzw. den Schneidecken 6 ist eine Stützfase 11 ausgebildet. Die Stützfase 11 verringert Vibrationen sowie die Gefahr an Ausbrüchen an Schneidkanten 5.

Weiters ist an der Deckfläche 2 eine Spanleitstufe 12 ausgebildet. Die Spanleitstufe 12 dient zur kontrollierten Abfuhr eines von dem Schneideinsatz 1 abgehobenen Spans.

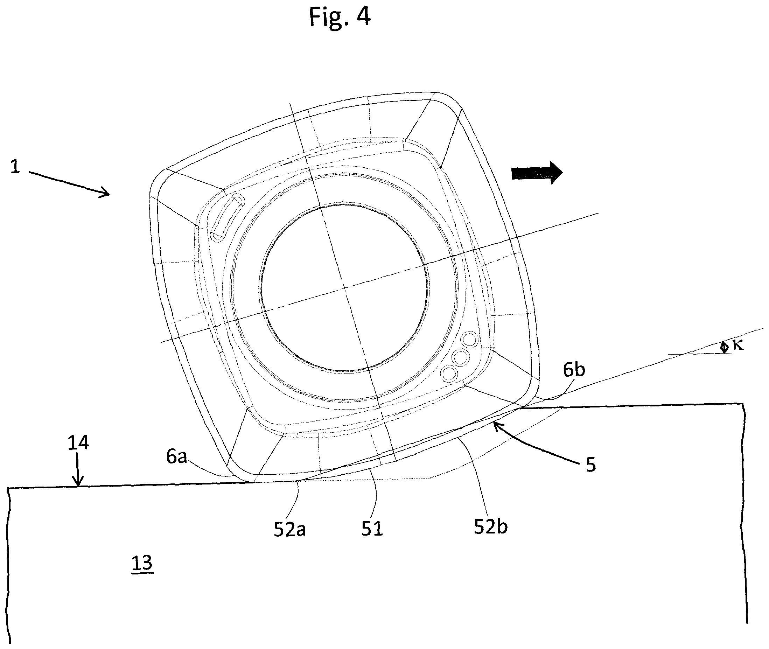

Figur 4 zeigt einen erfindungsgemäßen Schneideinsatz 1 im Eingriff mit einem zu zerspanenden Werkstück 13.

Eine Vorschubrichtung des Schneideinsatzes 1 ist über einen Blockpfeil kenntlich gemacht. Die Drehrichtung des Schneideinsatzes 1 ist normal zur Zeichnungsebene und weist in Richtung Betrachter. Durch strichlierte Hilfslinien ist am Werkstück 13 jener Spanquerschnitt angedeutet, welcher beim nächsten Eintritt eines Schneideinsatzes abgenommen wird.

Der Schneideinsatz 1 ist mit einem Einstellwinkel κ radial zu einer Werkstückoberfläche 14 geneigt. Der Einstellwinkel κ wird zwischen der Werkstückoberfläche 14 *und der Verbindung des tiefsten Punktes* des Schneideinsatzes 1 bezüglich der Werkstückoberfläche 14 und dem Austrittspunkt der Schneide 5 aus dem Werkstück 13 bestimmt.

Die Schneidecke 6a liegt in der Ebene der Werkstückoberfläche 14 nach Zerspanung und bezüglich der Vorschubrichtung hinten. Auf einen hier nicht gezeigten Werkzeughalter bezogen ist die Schneidecke 6a radial innenliegend.

Der erste konkave Abschnitt 51a der Schneidkante 5 bildet eine Schlichtschneide, der konvexe Abschnitt 51 sowie der zweite konkave Abschnitt 52b bilden eine Hauptschneide. Die Hauptschneide übernimmt den Hauptmaterialabtrag, während die Schlichtschneide die Oberfläche glättet.

Der Schneideinsatz 1 ist bevorzugt über ein pulvermetallurgisches Verfahren, typischerweise Pressen und Sintern hergestellt. Der Schneideinsatz 1 besteht bevorzugt aus Hartmetall oder einem Cermet.

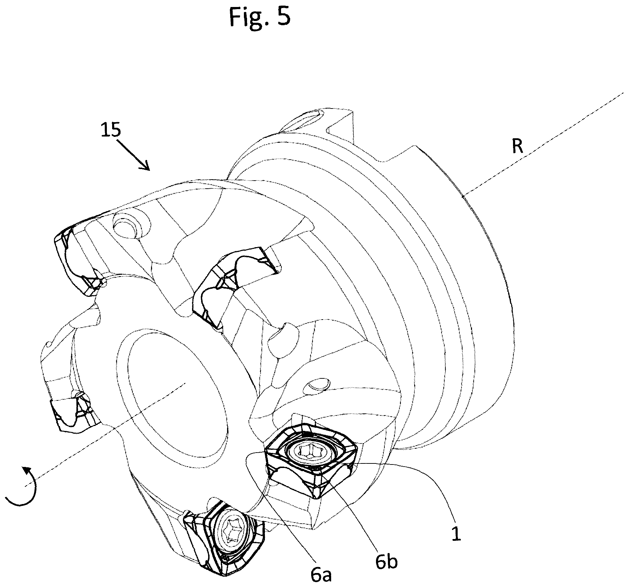

In Figur 5 ist die Anordnung von erfindungsgemäß ausgeführten Schneideinsätzen 1 in einem geeigneten Werkzeughalter 15 zum Planfräsen mit hohen Vorschubraten dargestellt. Im vorliegenden Beispiel sind fünf Schneideinsätze 1 angeordnet. Es können auch mehr oder auch weniger Schneideinsätze 1 auf einem Werkzeughalter angeordnet sein.

Die Rotationsrichtung des Werkzeughalters 15 um eine Rotationsachse R ist durch einen Pfeil angezeigt. Die Schneideinsätze 1 sind radial gespannt.

Der Schneideinsatz 1 ist am Werkzeughalter 15 so angeordnet, dass der konvex gekrümmte Abschnitt 51 bezüglich der Flugbahn des Schneideinsatzes 1 radial innenliegend ist. Durch diese Anordnung ist sichergestellt, dass der konvex gekrümmte Abschnitt 51 zuerst in ein zu zerspanendes Werkstück eintritt.

Die Anordnung ist besonders geeignet für Fräsoperationen mit hohen Vorschubraten, das sogenannte *High Feed Milling.* Die Charakteristik des erfindungsgemäßen Schneideinsatzes 1 zusammen mit der Anordnung mit dem Werkzeughalter 15 ergibt eine Hauptbelastungsrichtung in Richtung der Rotationsachse R (ist gleich Spindelachse), wodurch eine besonders hohe Steifigkeit und damit verbundene Genauigkeit erzielt wird.

### Liste der verwendeten Bezugszeichen

- 1: Schneideinsatz
- 2: Deckfläche
- 3: Grundfläche
- 4: Seitenfläche
- 41: Freifläche
- 42: Anlagefläche
- 5: Schneidkante
- 51: konvexer Abschnitt der Schneidkante
- 52a, 52b: konkave Abschnitte der Schneidkante
- 6: Schneidecke
- 7: Bohrung
- 8: Scheitelpunkt
- 9, 10: Übergangspunkt
- 11: Stützfase
- 12: Spanleitstufe
- 13: Werkstück
- 14: Werkstückoberfläche
- 15: Werkzeughalter
- γ: Freiwinkel
- κ: Einstellwinkel
- M: Mittelachse
- R: Rotationsachse

## Patentansprüche

1. Schneideinsatz (1) mit im Wesentlichen dreieckförmiger oder quadratischer Grundform mit einer Deckfläche (2) und einer Grundfläche (3), die durch seitliche Freiflächen (4) miteinander verbunden sind, wobei am Übergang von Freiflächen (4) zur Deckfläche (2) Schneidkanten (5) ausgebildet sind, welche Schneidkanten (5) sich zwischen Schneidecken (6) erstrecken und die Schneidkanten (5) einen in einer Seitenansicht auf eine entsprechende Freifläche (4) konvex gekrümmten Abschnitt (51) aufweisen, wobei der konvex gekrümmte Abschnitt (51) außermittig zwischen zwei Schneidecken (6) liegt und der Scheitelpunkt (8) des konvex gekrümmten Abschnittes (51) in Richtung jener Schneidecke (6a) verschoben ist, welche bei einem Einsatz des Schneideinsatzes (1) bezüglich einer Flugbahn des Schneideinsatzes (1) radial innenliegend ist und wobei die Schneidkanten (5) einen in einer Draufsicht auf die Deckfläche (2) konvexen Verlauf aufweisen, **dadurch gekennzeichnet, dass** der konvexe Abschnitt (51) der Schneidkante (5) beidseitig von konkav gekrümmten Abschnitten (52a, 52b) begrenzt ist, wobei sich die konkav gekrümmten Abschnitte (52a, 52b) bis zu den jeweils benachbarten Schneidecken (6) erstrecken.

2. Schneideinsatz (1) nach Anspruch 1, wobei die Übergänge vom konvexen Abschnitt (51) in den ersten konkaven Abschnitt (52a) und vom konvexen Abschnitt (51) in den zweiten konkaven Abschnitt (52b) jeweils tangential ausgebildet sind.

3. Schneideinsatz (1) nach wenigstens einem der vorangegangenen Ansprüche, wobei an allen Übergängen von Freiflächen (4) zur Deckfläche (2) Schneidkanten (5) ausgebildet sind.

4. Schneideinsatz (1) nach wenigstens einem der vorangegangenen Ansprüche, wobei ein Krümmungsradius (R₂, R₃) eines konkav gekrümmten Abschnittes (52a, 52b) ein drei- bis sechsfaches des Krümmungsradius (R₁) des konvex gekrümmten Abschnittes (51) beträgt.

5. Schneideinsatz (1) nach einem der vorangegangenen Ansprüche, wobei der Verlauf der Schneidkanten (5) in einer Draufsicht auf die Deckfläche (1) von Ellipsenabschnitten gebildet ist.

6. Anordnung mit wenigstens einem Schneideinsatz (1) nach wenigstens einem der vorangegangenen Ansprüche und einem Werkzeughalter (15).

## Claims

1. A cutting insert (1) having a substantially triangular or square basic shape with a top surface (2) and a base surface (3) which are connected together by lateral flanks (4), wherein, at the transition of flanks (4) to the top surface (2), cutting edges (5) are formed, which cutting edges (5) extend between cutting corners (6), the cutting edges (5) having a portion (51) that is convexly curved in side view of a respective flank (4), wherein the convexly curved portion (51) is located eccentrically between two cutting corners (6), such that the vertex (8) of the convexly curved portion (51) is shifted in the direction of that cutting corner (6a) that is located radially on the inside with regard to a trajectory of the cutting insert (1) when the cutting insert (1) is used,
wherein the cutting edges (5) have a profile that is convex in plan view of the top surface (2),
**characterized in that** the convex portion (51) of the cutting edge (5) is bounded on both sides by concavely curved portions (52a, 52b), wherein the concavely curved portions (52a, 52b) extend as far as the respectively adjacent cutting corners (6).

2. The cutting insert (1) as claimed in claim 1, wherein the transitions from the convex portion (51) into the first concave portion (52a) and from the convex portion (51) into the second concave portion (52b) are formed in each case in a tangential manner.

3. The cutting insert (1) as claimed in at least one of the preceding claims, wherein cutting edges (5) are formed at all transitions from flanks (4) to the top surface (2).

4. The cutting insert (1) as claimed in at least one of the preceding claims, wherein a radius of curvature (R₂, R₃) of a concavely curved portion (52a, 52b) amounts to three to six times the radius of curvature (R₁) of the convexly curved portion (51).

5. The cutting insert (1) as claimed in at least one of the preceding claims, wherein the profile of the cutting edges (5) is formed by elliptical portions in plan view of the top surface (2).

6. An arrangement having at least one cutting insert (1) as claimed in at least one of the preceding claims and a tool holder (15).

## Revendications

1. Insert de coupe (1) ayant une forme de base sensiblement triangulaire ou carrée et comportant une face supérieure (2) et une face de base (3) qui sont reliées l'une à l'autre par des faces de dépouille latérales (4), des arêtes de coupe (5) étant formées au niveau de la transition allant des faces de dépouille (4) à la face supérieure (2), lesquelles arêtes de coupe (5) s'étendent entre des coins de coupe (6) et lesquelles arêtes de coupe (5) comportent une portion incurvée convexe (51) dans une vue latérale d'une face de dépouille correspondante (4), la portion incurvée convexe (51) étant située de manière excentrée entre deux coins de coupe (6) et le sommet (8) de la portion incurvée convexe (51) étant décalé en direction du coin de coupe (6a) qui est radialement intérieur par rapport à une trajectoire de l'insert de coupe (1) lorsque l'insert de coupe (1) est inséré et les arêtes de coupe (5) ayant une forme convexe dans une vue de dessus de la face supérieure (2), **caractérisé en ce que**
la portion convexe (51) de l'arête de coupe (5) est délimitée des deux côtés par des portions incurvées concaves (52a, 52b), les portions incurvées concaves (52a, 52b) s'étendant jusqu'aux coins de coupe (6) respectivement adjacents.

2. Insert de coupe (1) selon la revendication 1, les transitions allant de la portion convexe (51) à la première portion concave (52a) et de la portion convexe (51) à la deuxième portion concave (52b) étant chacune tangentielles.

3. Insert de coupe (1) selon l'une au moins des revendications précédentes, des arêtes de coupe (5) étant formées au niveau de toutes les transitions allant des faces de dépouille (4) à la face supérieure (2).

4. Insert de coupe (1) selon l'une au moins des revendications précédentes, un rayon de courbure (R₂, R₃) d'une portion incurvée concave (52a, 52b) étant égal à trois à six fois le rayon de courbure (R₁) de la portion incurvée convexe (51).

5. Insert de coupe (1) selon l'une des revendications précédentes, la forme des arêtes de coupe (5) étant formée par des portions d'ellipse dans une vue de dessus de la face supérieure (1).

6. Ensemble comprenant au moins un insert de coupe (1) selon l'une au moins des revendications précédentes et un porte-outil (15).
